# EUROPÄISCHE PATENTANMELDUNG

(11) **EP 4 020 656 A1**
(43) Veröffentlichungstag der Anmeldung: **29.06.2022**
(21) Anmeldenummer: 21206040.4
(22) Anmeldetag: 02.11.2021
(51) Int. Cl.: H01M 10/06, H01M 10/42, H01M 10/48

(54) **VERFAHREN ZUR BESTIMMUNG AKTUELLER TECHNISCHER BATTERIEPARAMETER EINER STATIONSBATTERIE EINER UMSPANNANLAGE**

(30) Priorität: 22.12.2020 DE 102020134727
(71) Anmelder: Westnetz GmbH, 44139 Dortmund (DE)
(72) Erfinder: Bunselmeyer, Rainer, 49176 Hilter (DE); Jaschke, Mario, 59759 Arnsberg (DE)
(74) Vertreter: Bals & Vogel Patentanwälte PartGmbB

(57) **Zusammenfassung**

Die Erfindung betrifft ein Verfahren zur Bestimmung aktueller technischer Batterieparameter einer Stationsbatterie (4) einer Umspannanlage, umfassend die Schritte eines Erfassens (40) eines aktuellen über die Stationsbatterie (4) übertragenen Stroms mittels einer Erfassungseinheit (14), eines Erfassens (42) einer aktuell an der Stationsbatterie (4) anliegenden Spannung mittels einer Erfassungseinheit (14), eines Erfassens (44) eines weiteren Parameters der Stationsbatterie (4) zur Erhöhung der Aussagekraft der zu bestimmenden aktuellen technischen Batterieparameter sowie eines Auswertens (52) der erfassten Parameter zur Bestimmung der aktuellen technischen Batterieparameter der Stationsbatterie (4) mittels einer Kontrolleinheit (12), wobei der weitere Parameter die mittels eines Sensors (8) messbare aktuelle Säuredichte der Stationsbatterie (4) ist.

## Beschreibung

Die vorliegende Erfindung betrifft ein Verfahren und ein System zur Bestimmung aktueller technischer Batterieparameter einer Stationsbatterie einer Umspannanlage.

In einer Umspannanlage werden die schutz- und leittechnischen Gleichstromverbraucher im Normalbetrieb über einen Gleichrichter aus dem Wechselspannungsnetz versorgt. Parallel zu den Verbrauchern befindet sich eine - in der Regel in Form eines Blei-Säure-Akkumulators gebildete - Stationsbatterie, die bei einem Netzausfall in einem Netzersatzbetrieb die Spannungsversorgung der schutz- und leittechnischen Komponenten unterbrechungsfrei für ca. 8-12 Stunden übernimmt. Im Netzersatzbetrieb wird die Stationsbatterie durch die Verbraucher kontinuierlich entladen.

Ein Problem bzgl. des Einsatzes solcher Stationsbatterien ergibt sich dadurch, dass die nach einem Netzersatzbetrieb noch zur Verfügung stehende Rest-Batteriekapazität einer Stationsbatterie aktuell weder gemessen, noch einer netzführenden Stelle, wie einer Leitstelle oder einer Systemführung, übertragen wird. Dadurch ist der momentane Ladezustand der Batterien bei wiederkehrender Wechselspannungsversorgung unbekannt. Insbesondere bei großflächigen Stromausfällen (Schwarzfall) in der gleichzeitig mehrere Anlagen betroffen sind, führt dies zu erheblichen Problemen hinsichtlich des Störungsmanagements.

Darüber hinaus erfolgt zur Zeit keine validierte Messung bzw. Bewertung der Batteriealterung bzw. -lebensdauer. Aktuell wird diese lediglich durch eine halbjährliche Wartung teilweise subjektiv abgeschätzt, wobei die Batterie einzig optisch auf Ablagerungen geprüft wird. Zudem erfolgt lediglich im jährlichen Turnus eine manuelle Säuredichtemessung mit einem Säureheber, wobei mit dieser Messung zwar die zum Messzeitpunkt zur Verfügung stehende Kapazität ermittelt werden kann, eine langfristige Prognose hinsichtlich der Batteriealterung bzw. der Batterielebensdauer allerdings nicht möglich ist.

Zwar sind Bewertungsverfahren zur Bestimmung einer verfügbaren momentanen Batteriekapazität auf Basis des technischen Batteriealters in Form so genannter Kapazitätstests bekannt, jedoch sind diese Tests besonders aufwändig und kostenintensiv. Zudem ist es zur Durchführung der Tests erforderlich, eine Ersatzbatterie zu installieren, um in der Zeit während des Testes einen möglichen Netzausfall abzudecken.

Es ist daher die Aufgabe der vorliegenden Erfindung, die voranstehend beschriebenen Nachteile zumindest teilweise zu beheben. Insbesondere ist es die Aufgabe der Erfindung, auf konstruktiv einfache und komfortable Art und Weise eine zuverlässige und exakte Bestimmung aktueller technischer Batterieparameter einer Stationsbatterie einer Umspannanlage zu gewährleisten.

Die voranstehende Aufgabe wird gelöst durch ein Verfahren mit den Merkmalen des Anspruchs 1 sowie ein System mit den Merkmalen des Anspruchs 13. Weitere Merkmale und Details der Erfindung ergeben sich aus den jeweiligen Unteransprüchen, der Beschreibung und den Zeichnungen. Dabei gelten Merkmale und Details, die im Zusammenhang mit dem erfindungsgemäßen Verfahren beschrieben sind, selbstverständlich auch im Zusammenhang mit dem erfindungsgemäßen System und umgekehrt, sodass bezüglich der Offenbarungen zu den einzelnen Erfindungsaspekten stets wechselseitig Bezug genommen wird bzw. werden kann.

Erfindungsgemäß ist ein Verfahren zur Bestimmung aktueller technischer Batterieparameter einer Stationsbatterie einer Umspannanlage vorgesehen. Hierbei umfasst das erfindungsgemäße Verfahren die Schritte eines Erfassens eines aktuellen über die Stationsbatterie übertragenen Stroms mittels einer Erfassungseinheit, eines Erfassens einer aktuell an der Stationsbatterie anliegenden Spannung mittels einer Erfassungseinheit, eines Erfassens eines weiteren Parameters der Stationsbatterie zur Erhöhung der Aussagekraft der zu bestimmenden aktuellen technischen Batterieparameter sowie eines Auswertens der erfassten Parameter zur Bestimmung der aktuellen technischen Batterieparameter der Stationsbatterie mittels einer Kontrolleinheit., wobei der weitere Parameter die mittels eines Sensors messbare aktuelle Säuredichte der Stationsbatterie ist.

Unter technischen Batterieparametern können im Rahmen der Erfindung insbesondere Parameter verstanden werden, die die Funktionstüchtigkeit bzw. den aktuellen Zustand der Stationsbatterie definieren. Unter einer Stationsbatterie ist erfindungsgemäß insbesondere die Gesamteinheit aus zusammengeschalteten Batterieblocks anzusehen, die in einer Umspannanlage zur Überbrückung einer Energieversorgung im Falle eines Netzersatzbetriebs angeordnet sind. Vorzugsweise ist die Stationsbatterie in Form eines Blei-Säure-Akkumulators gebildet. Im Rahmen der Erfindung ist erkannt worden, dass über die Ausführung der erfindungsgemäß vorgesehenen Verfahrensschritte auf einfache und komfortable Weise eine zuverlässige Bestimmung aktueller technischer Batterieparameter einer Stationsbatterie möglich ist. Durch die erfindungsgemäß vorgesehene Erfassung einer aktuellen Säuredichte der Stationsbatterie ist es zudem insbesondere möglich, eine besonders exakte Messung aktueller technischer Batterieparameter einer Stationsbatterie zu ermöglichen. Die Messung der Säuredichte kann hierbei insbesondere mittels eines Säuredichtesensors erfolgen. Zudem erlaubt das gegenständliche Verfahren die Bestimmung aktueller technischer Batterieparameter einer Stationsbatterie im laufenden Betrieb, was den Komfort der Methode deutlich erhöht. Es versteht sich zudem, dass die voranstehend genannten Verfahrensschritte nicht in der vorgeschlagenen Reihenfolge ausgeführt werden müssen, sondern hinsichtlich ihrer Reihenfolge vorzugsweise weitgehend frei kombinierbar sind.

Im Hinblick auf die Erhöhung der Aussagekraft der zu bestimmenden aktuellen technischen Batterieparameter, ist es vorteilhafter Weise denkbar, dass zur Erhöhung der Aussagekraft der zu ermittelnden aktuellen technischen Batterieparameter zusätzlich ein Erfassen der aktuellen Temperatur mittels eines Temperatursensors vorgesehen ist. Die Batteriekapazität bzw. die aktuelle Säuredichte ist hierbei sehr stark von der Temperatur abhängig, sodass über die Einbeziehung der aktuellen Temperatur eine besonders effektive Steigerung der Erhöhung der Aussagekraft der zu ermittelnden aktuellen technischen Batterieparameter möglich ist. Hierbei kann die Temperatur im Hinblick auf eine hohe Genauigkeit vorteilhafterweise im Zellinneren bestimmt werden. Im Rahmen einer konstruktiv einfachen Möglichkeit einer Implementierung einer zusätzlichen Berücksichtigung der aktuellen Temperatur ist es dagegen bereits vorteilhaft, die Temperatur im Inneren der Umspannungsanlage zu messen.

Im Rahmen einer möglichst aktuellen Bestimmung aktueller technischer Batterieparameter einer Stationsbatterie kann es vorteilhafter Weise ferner vorgesehen sein, dass das Erfassen der aktuellen Säuredichte und/oder der aktuellen Temperatur kontinuierlich und/oder zyklisch erfolgt. Ebenso kann auch das Erfassen des aktuell über die Stationsbatterie übertragenen Stroms sowie der aktuell an der Stationsbatterie anliegenden Spannung und ein Auswerten der erfassten Parameter kontinuierlich und/oder zyklisch erfolgen. Ein kontinuierliches Erfassen gewährleistet hierbei sicherlich die aktuellste Form einer Bestimmung der Batterieparameter. Aus datentechnischen bzw. energie- und aufwandstechnischen Gründen kann dagegen jedoch auch ein zyklisches Erfassen von Vorteil sein, insbesondere, wenn bspw. die Zyklen zur Erfassung auf Basis der bestimmten aktuellen technischen Parameter variiert werden. So können die Zyklen zur Erfassung der aktuellen Säuredichte bspw. kurz sein, wenn über die Bestimmung aktueller technischer Batterieparameter herausgefunden wurde, dass sich eine Stationsbatterie in einem mangelhaften Zustand (niedriger Ladezustand, hohe Alterung ...) befindet. Die Zyklen können andererseits länger sein, wenn über die Bestimmung aktueller technischer Batterieparameter herausgefunden wurde, dass sich die Stationsbatterie in einem guten Zustand befindet.

Im Hinblick auf eine besonders aussagekräftige Charakterisierung einer Stationsbatterie kann erfindungsgemäß vorteilhafterweise vorgesehen sein, dass die zu bestimmenden aktuellen technischen Batterieparameter die aktuell verfügbare Batteriekapazität (SOC) und/oder die aktuelle Leistungsfähigkeit (SOF) und/oder der aktuelle Alterungszustand (SOH) der Stationsbatterie ist. So stellt das erfindungsgemäß vorgeschlagene Verfahren eine besonders einfache und komfortable Möglichkeit zur Bestimmung der aktuell verfügbaren Batteriekapazität dar. Aktuell ist es nämlich nicht möglich, die Batteriekapazität direkt zu messen. Zudem hängt die aktuell verfügbaren Batteriekapazität stark von verschiedenen Parametern, wie der Akkuchemie, der Temperatur, des Ladestroms und der Alterung ab, wobei die Alterung der Batterie sicherlich den größten Einfluss hat. Aufgrund von chemischen Prozessen und der Zunahme des Innenwiderstandes reduziert sich Kapazität der Batterie mit zunehmendem Alter und steigender Anzahl von Lade- und Entladezyklen deutlich und damit auch die maximal zu speichernde Ladung.

Im Rahmen einer einfachen und schnellen Bestimmung von aktuellen technischen Batterieparametern kann es zudem von Vorteil sein, wenn zusätzlich ein Ermitteln von Randparametern vorgesehen ist.

Hierbei ist es insbesondere denkbar, dass die Randparameter durch den verwendeten Batterietyp vorgegeben sind, wobei die durch den verwendeten Batterietyp vorgegebenen Randparameter vorzugsweise die Ausgangssäuredichte und/oder das Elektrolytgewicht einer vollgeladenen Zelle und/oder das wirksame Elektrolytvolumen umfassen.

Ebenso ist es vorstellbar, dass die Randparameter durch den Anlagenaufbau der Umspannanlage vorgegeben sind, wobei die durch den Anlagenaufbau der Umspannanlage vorgegebenen Randparameter vorzugsweise den Laststrom umfassen.

Im Rahmen der Steigerung der Aussagekraft einer Bestimmung eines aktuellen Zustands einer Stationsbatterie kann gegenständlich vorteilhafterweise ferner vorgesehen sein, dass das Bestimmen der aktuellen technischen Batterieparameter der Stationsbatterie zusätzlich unter einem Anpassen an ein geeignetes Batteriemodell erfolgt. Solche Modelle können insbesondere eine sehr große Menge an vorliegenden Daten bzgl. des Verhaltens von Batteriezellen aufweisen, sodass ein Anpassen der erfassten Daten an dieses Modell die Genauigkeit der Bestimmung erhöht.

Im Rahmen einer einfachen und schnellen Bestimmung von aktuellen technischen Batterieparametern kann zudem vorteilhafter Weise vorgesehen sein, dass das Bestimmen der aktuellen technischen Batterieparameter der Stationsbatterie die Ermittlung des wirksamen Elektrolytvolumens Vw und die Ermittlung der entnommenen Strommenge Q_{E} umfasst, wobei zur Ermittlung der entnommenen Strommenge Q_{E} vorzugsweise die gemessene Säuredichte der Stationsbatterie verwendet wird. Hierbei kann vorzugweise über die Verwendung von aus der Literatur bekannten Verläufen (bspw. der Kennlinienschar der Säuredichte) der Säuredichte gegen die entnommene Strommenge die entnommene Strommenge pro I Säure ermittelt werden.

Im Hinblick auf ein verbessertes Störungsmanagement bei dem Betrieb einer Umspannanlage kann gegenständlich vorteilhafterweise vorgesehen sein, dass ein Übertragen der erfassten aktuellen Säuredichte und/oder der aktuellen Temperatur und/oder der bestimmten technischen Batterieparameter der Stationsbatterie mittels einer Kontrolleinheit an eine Leitzentrale vorgesehen ist, wobei die übertragenen Daten vorzugsweise vor einer Übertragung parametrisiert werden. Hierbei kann somit je nach Art der übertragenen Informationen eine Bestimmung der technischen Batterieparameter der Stationsbatterie im Vorhinein durch die Kontrolleinheit oder nachträglich, bspw. über die Leitstelle erfolgen. Eine Parametrisierung hilft hierbei insbesondere bezüglich einer Sortierung, bspw. einer zeitlichen Sortierung der Daten. Durch die Übertragung der Daten ist es somit möglich, eine verfügbare Restbatteriekapazität der Stationsbatterien exakt abzuschätzen, was insbesondere bei großflächigen Stromausfällen von Vorteil wäre. Im Hinblick auf eine einfache Abschätzbarkeit der Restbatteriekapazität der Stationsbatterien könnte hierbei im Falle einer Entladung mit konstantem Belastungsstrom vorteilhafterweise zudem eine Umrechnung der Restbatteriekapazität der Stationsbatterien in eine noch verfügbare Betriebsdauer (z. B. in Stunden) erfolgen.

Im Hinblick auf die Vorbeugung von Ausfällen einer Stromversorgung kann erfindungsgemäß insbesondere vorgesehen sein, dass auf Basis des erfassten aktuellen über die Stationsbatterie übertragenen Stroms und/oder auf Basis der erfassten aktuell an der Stationsbatterie anliegenden Spannung und/oder auf Basis der erfassten aktuellen Säuredichte der Stationsbatterie und/oder auf Basis der erfassten aktuellen Temperatur, vorzugsweise auf Basis der bestimmten aktuellen technischen Batterieparameter der Stationsbatterie ein Festlegen eines Austauschtermins für den Austausch der Stationsbatterie und/oder eines Wartungstermins für eine Wartung der Stationsbatterie erfolgt. Durch die erfindungsgemäß vorgesehene Bestimmung aktueller technischer Batterieparameter der Stationsbatterie ist eine frühzeitige Erkennung von Ausfällen einer Stationsbatterie möglich, auf die entsprechend vorausschauend im Vorhinein reagiert werden kann.

Um die Verwendungsdauer der Batterie zu erhöhen kann gegenständlich insbesondere vorgesehen sein, dass auf Basis des erfassten aktuellen über die Stationsbatterie übertragenen Stroms und/oder auf Basis der erfassten aktuell an der Stationsbatterie anliegenden Spannung und/oder auf Basis der erfassten aktuellen Säuredichte der Stationsbatterie und/oder auf Basis der erfassten aktuellen Temperatur, vorzugsweise auf Basis der bestimmten aktuellen technischen Batterieparameter der Stationsbatterie ein Durchführen eines Regenerationszyklus zur Regeneration der Stationsbatterie erfolgt, wobei der Regenerationszyklus insbesondere die Einleitung gezielter Lade- und Entladevorgänge umfasst. Im Rahmen der Erfindung ist hierbei erkannt worden, dass ein solcher Regenerationszyklus die Lebensdauer einer Batterie um 2 bis 5 Jahre verlängern kann. Vorzugsweise kann der Regenerationszyklus hierbei über die Kontrolleinheit eingeleitet werden, wobei die übertragende Gleichspannung zur Prophylaxe und/oder Regeneration von Sulfatierungen mit einem Pulsmuster überlagert wird. Unter Sulfatierung wird hierbei ein Prozess verstanden, der sich, insbesondere bei länger in einem teilgeladenen Zustand gelagerten Blei-Säure-Batterien ausbildet. Hierbei wachsen in dem aktiven amorphen Bleisulfat Kristalle heran, die nicht mehr an den Lade- und Entladevorgängen teilhaben, was schließlich zu einem merklichen Kapazitätsverlust führt. Wie im Rahmen der Erfindung erkannt wurde, kann mittels Einführens eines Pulsmusters in Überlagerung zu der übertragenen Gleichspannung nicht nur einer Sulfatierung vorgebeugt werden, sondern diese auch zumindest teilweise zurückgebildet werden.

Ebenfalls Gegenstand der Erfindung ist ferner ein System zur Bestimmung aktueller technischer Batterieparameter einer Stationsbatterie einer Umspannanlage, insbesondere zur Ausführung eines voranstehend beschriebenen Verfahrens. Hierbei umfasst das erfindungsgemäße System eine Erfassungseinheit zur Erfassung eines aktuellen über die Stationsbatterie übertragenen Stroms, eine Erfassungseinheit zur Erfassung einer aktuell an der Stationsbatterie anliegenden Spannung, einen Sensor zur Erfassung einer aktuellen Säuredichte der Stationsbatterie sowie eine Kontrolleinheit zur Auswertung der erfassten Parameter zur Bestimmung der aktuellen technischen Batterieparameter der Stationsbatterie. Damit weist das erfindungsgemäße System die gleichen Vorteile auf, wie sie bereits ausführlich in Bezug auf das erfindungsgemäße Verfahren beschrieben worden sind. Die Kontrolleinheit kann hierbei vorzugsweise zusätzlich dazu vorgesehen sein, die Werte der erfassten aktuellen Säuredichte und/oder der aktuellen Temperatur und/oder der bestimmten technischen Batterieparameter der Stationsbatterie an eine Leitzentrale zu übertragen. Zusätzlich kann die Kontrolleinheit dazu vorgesehen sein, auf Basis der erfassten Parameter und/oder auf Basis der ermittelten aktuellen technischen Batterieparameter der Stationsbatterie einen Regenerationszyklus zur Regeneration der Stationsbatterie durchzuführen, wobei der Regenerationszyklus insbesondere die Einleitung gezielter Lade- und Entladevorgänge umfasst. Der Sensor zur Erfassung einer aktuellen Säuredichte der Stationsbatterie kann ferner insbesondere in Form eines Säuredichtesensors gebildet sein.

Im Hinblick auf die Erhöhung der Aussagekraft der zu ermittelnden aktuellen technischen Batterieparameter, ist es vorteilhafter Weise denkbar, dass ein Temperatursensor zur Erfassung der aktuellen Temperatur vorgesehen ist.

Im Hinblick auf eine konstruktiv einfache und komfortable Weise einer Erfassung von Daten sowie einer Einsparung von zusätzlichem Sensormaterial kann ferner vorteilhafter Weise vorgesehen sein, dass die Erfassungseinheit zur Erfassung eines aktuellen über die Stationsbatterie übertragenen Stroms und/oder die Erfassungseinheit zur Erfassung einer aktuell an der Stationsbatterie anliegenden Spannung in einem Gleichrichter der Umspannanlage angeordnet ist. Es versteht sich zudem, dass zur Erfassung eines aktuellen über die Stationsbatterie übertragenen Stroms und/oder zur Erfassung einer aktuell an der Stationsbatterie anliegenden Spannung alternativ auch zusätzliche Messeinheiten oder Sensoren vorgesehen sein können.

Ebenfalls Gegenstand der Erfindung ist ferner eine Umspannanlage, umfassend ein voranstehend beschriebenes System zur Bestimmung aktueller technischer Batterieparameter einer Stationsbatterie.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Hierbei können die in den Ansprüchen und in der Beschreibung erwähnten Merkmale jeweils einzeln für sich oder in beliebiger Kombination erfindungswesentlich sein.

Es zeigen:
- Fig. 1: eine schematische Darstellung der einzelnen Schritte eines erfindungsgemäßen Verfahrens zur Bestimmung aktueller technischer Batterieparameter einer Stationsbatterie einer Umspannanlage gemäß einem ersten Ausführungsbeispiel,
- Fig. 2: eine schematische Darstellung eines erfindungsgemäßen Systems zur Bestimmung aktueller technischer Batterieparameter einer Stationsbatterie einer Umspannanlage gemäß einem ersten Ausführungsbeispiel.

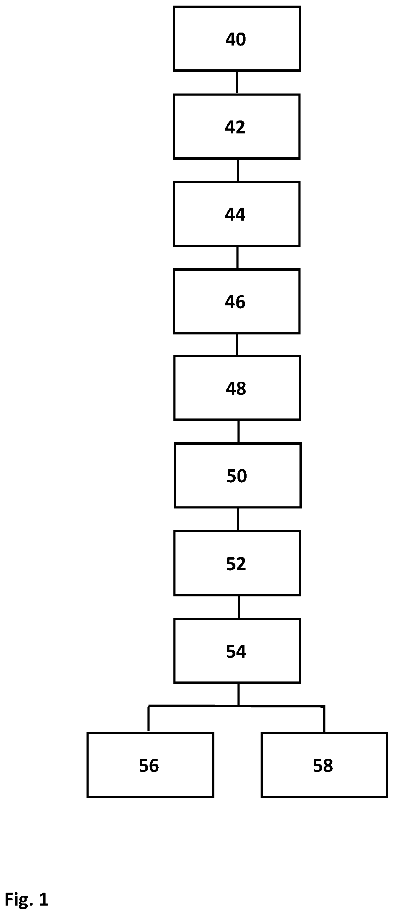

Fig. 1 zeigt eine schematische Darstellung der einzelnen Schritte eines erfindungsgemäßen Verfahrens zur Bestimmung aktueller technischer Batterieparameter einer Stationsbatterie 4 einer Umspannanlage gemäß einem ersten Ausführungsbeispiel.

Hierbei umfasst das erfindungsgemäße Verfahren gemäß dem ersten Ausführungsbeispiel die Schritte eines Erfassens 40 eines aktuellen über die Stationsbatterie 4 übertragenen Stroms mittels einer Erfassungseinheit 14 sowie eines Erfassens 42 einer aktuell an der Stationsbatterie 4 anliegenden Spannung mittels einer Erfassungseinheit 14.

Des Weiteren ist gemäß dem erfindungsgemäßen Verfahren ein Erfassen 44 eines weiteren Parameters der Stationsbatterie 4 zur Erhöhung der Aussagekraft der zu bestimmenden aktuellen technischen Batterieparameter vorgesehen, wobei der weitere Parameter die mittels eines Sensors 8 messbare aktuelle Säuredichte der Stationsbatterie 4 ist.

Zudem umfasst das gegenständliche Verfahren zur Bestimmung aktueller technischer Batterieparameter einer Stationsbatterie einer Umspannanlage zur Erhöhung der Aussagekraft der zu ermittelnden aktuellen technischen Batterieparameter zusätzlich den optionalen Schritt eines Erfassens 46 der aktuellen Temperatur mittels eines Temperatursensors 10, den optionalen Schritt eines zusätzlichen Ermittelns 48 von Randparametern sowie den zusätzlichen optionalen Schritt eines Anpassens 50 der erfassten Daten und/oder Parameter an ein geeignetes Batteriemodell.

Die Randparameter können hierbei insbesondere durch den verwendeten Batterietyp vorgegeben sein, wobei die durch den verwendeten Batterietyp vorgegebenen Randparameter vorzugsweise die Ausgangssäuredichte und/oder das Elektrolytgewicht einer vollgeladenen Zelle und/oder das wirksame Elektrolytvolumen umfassen können.

Ebenso können die Randparameter durch den Anlagenaufbau der Umspannanlage vorgegeben sein, wobei die durch den Anlagenaufbau der Umspannanlage vorgegebenen Randparameter vorzugsweise den Laststrom umfassen können.

Nach einem Anpassen 50 der erfassten Daten und/oder Parameter an ein geeignetes Batteriemodell, erfolgt gemäß dem gegenständlichen Verfahren ein Auswerten 52 der erfassten Parameter zur Bestimmung der aktuellen technischen Batterieparameter der Stationsbatterie 4 mittels einer Kontrolleinheit 12.

Anschließend erfolgt gemäß dem vorliegend dargestellten Ausführungsbeispiel des erfindungsgemäßen Verfahrens ein Übertragen 54 der erfassten aktuellen Säuredichte und/oder der aktuellen Temperatur und/oder der bestimmten technischen Batterieparameter der Stationsbatterie 4 mittels einer Kontrolleinheit 12 an eine Leitzentrale 16, wobei die übertragenen Daten vorzugsweise vor einer Übertragung 54 parametrisiert werden.

Zuletzt ist ferner ein Festlegen 56 eines Austauschtermins für den Austausch der Stationsbatterie 4 und/oder eines Wartungstermins für eine Wartung der Stationsbatterie 4 vorgesehen, wobei das Festlegen 56 auf Basis des erfassten aktuellen über die Stationsbatterie 4 übertragenen Stroms und/oder auf Basis der erfassten aktuell an der Stationsbatterie 4 anliegenden Spannung und/oder auf Basis der erfassten aktuellen Säuredichte der Stationsbatterie 4 und/oder auf Basis der erfassten aktuellen Temperatur, vorzugsweise auf Basis der bestimmten aktuellen technischen Batterieparameter der Stationsbatterie 4 erfolgt.

Ebenso ist zudem noch ein Durchführen 58 eines Regenerationszyklus zur Regeneration der Stationsbatterie 4, vorgesehen, wobei das Durchführen 58 auf Basis des erfassten aktuellen über die Stationsbatterie 4 übertragenen Stroms und/oder auf Basis der erfassten aktuell an der Stationsbatterie 4 anliegenden Spannung und/oder auf Basis der erfassten aktuellen Säuredichte der Stationsbatterie 4 und/oder auf Basis der erfassten aktuellen Temperatur, vorzugsweise auf Basis der bestimmten aktuellen technischen Batterieparameter der Stationsbatterie 4 erfolgt, wobei der Regenerationszyklus insbesondere die Einleitung gezielter Lade- und Entladevorgänge umfasst.

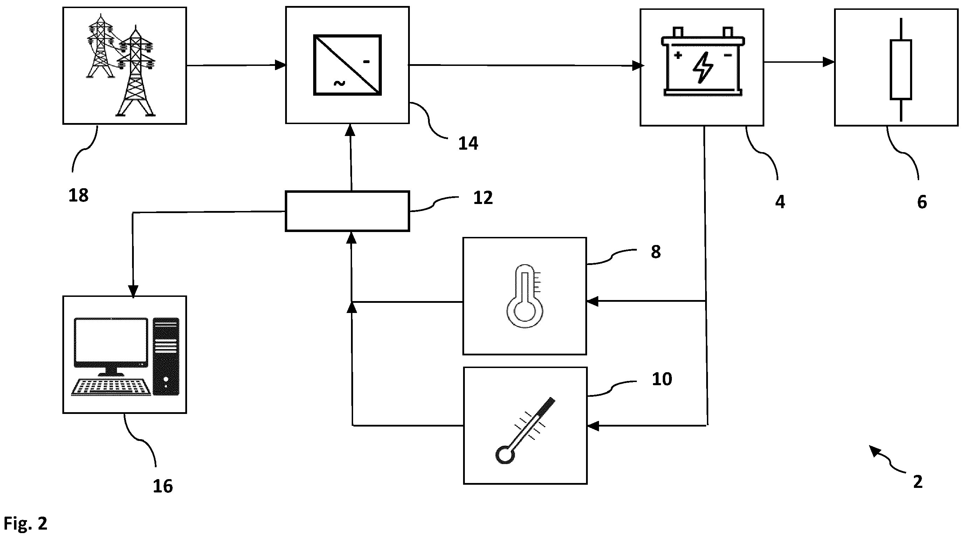

Fig. 2 zeigt eine schematische Darstellung eines erfindungsgemäßen Systems 2 zur Bestimmung aktueller technischer Batterieparameter einer Stationsbatterie 4 einer Umspannanlage gemäß einem ersten Ausführungsbeispiel.

Hierbei umfasst das gegenständliche System 2 eine Erfassungseinheit 14 zur Erfassung 40 eines aktuellen über die Stationsbatterie 4 übertragenen Stroms, eine Erfassungseinheit 14 zur Erfassung 42 einer aktuell an der Stationsbatterie 4 anliegenden Spannung, einen Sensor 8 zur Erfassung 44 einer aktuellen Säuredichte der Stationsbatterie 4 sowie eine Kontrolleinheit 12 zur Auswertung der erfassten Parameter zur Bestimmung der aktuellen technischen Batterieparameter der Stationsbatterie 4.

Zudem umfasst das gegenständliche System, wie vorliegend dargestellt, einen Temperatursensor 10 zur Erfassung 46 der aktuellen Temperatur.

Die Erfassungseinheit 14 zur Erfassung eines aktuellen über die Stationsbatterie 4 übertragenen Stroms bzw. zur Erfassung einer aktuell an der Stationsbatterie 4 anliegenden Spannung ist vorliegend in Form eines Gleichrichters der Umspannanlage gebildet bzw. in diesem angeordnet. Der Gleichrichter transformiert die Wechselspannung aus dem Übertragungsnetz 18 in eine Gleichspannung zur Abgabe an die Verbraucher 6 über die Stationsbatterie 4, sodass über den Gleichrichter 14 einfach die aktuell an der an der Stationsbatterie 4 anliegende Spannung bzw. der aktuelle über die Stationsbatterie 4 übertragene Strom bestimmt werden kann.

Hinter der Kontrolleinheit 12 ist ferner die Leitstelle 16 angeordnet, an die die Kontrolleinheit 12 die Werte der erfassten aktuellen Säuredichte und/oder der aktuellen Temperatur und/oder der bestimmten technischen Batterieparameter der Stationsbatterie überträgt.

Zusätzlich kann die Kontrolleinheit 12 dazu vorgesehen sein, auf Basis der erfassten Parameter und/oder auf Basis der ermittelten aktuellen technischen Batterieparameter der Stationsbatterie einen Regenerationszyklus zur Regeneration der Stationsbatterie 4 durchzuführen, wobei der Regenerationszyklus insbesondere die Einleitung gezielter Lade- und Entladevorgänge umfasst.

Mittels des erfindungsgemäßen Verfahrens bzw. des erfindungsgemäßen Systems ist es insbesondere möglich, auf konstruktiv einfache und komfortable Art und Weise eine zuverlässige und exakte Bestimmung aktueller technischer Batterieparameter einer Stationsbatterie einer Umspannanlage zu gewährleisten. Durch die Ermittlung dieser Parameter ist es ferner möglich, ein verbessertes Störungsmanagement für großflächige Stromausfälle zur Verfügung zu stellen sowie eine frühzeitige Erkennung von Ausfällen und eine verbesserte Analyse hinsichtlich von Austauschen und Wartungen zu ermöglichen.

### Bezugszeichenliste

- 2: System zur Bestimmung aktueller technischer Batterieparameter einer Stationsbatterie
- 4: Stationsbatterie
- 6: Verbraucher
- 8: Sensor / Säuredichtesensor
- 10: Temperatursensor
- 12: Kontrolleinheit
- 14: Erfassungseinheit / Gleichrichter
- 16: Leitstelle
- 18: Übertragungsnetz

- 40: Erfassen eines aktuellen übertragenen Stroms
- 42: Erfassen einer aktuell anliegenden Spannung
- 44: Erfassen eines weiteren Parameters
- 46: Erfassen der aktuellen Temperatur
- 48: Ermitteln von Randparametern
- 50: Anpassen an ein geeignetes Batteriemodell
- 52: Auswerten der erfassten Parameter zur Bestimmung der aktuellen technischen Batterieparameter
- 54: Übertragen der erfassten aktuellen Säuredichte
- 56: Festlegen eines Austauschtermins und/oder eines Wartungstermins
- 58: Durchführen eines Regenerationszyklus

- V_{W}: Wirksames Elektrolytvolumen
- Q_{E}: Entnommene Strommenge

## Patentansprüche

1. Verfahren zur Bestimmung aktueller technischer Batterieparameter einer Stationsbatterie (4) einer Umspannanlage, umfassend die Schritte:
- Erfassen (40) eines aktuellen über die Stationsbatterie (4) übertragenen Stroms mittels einer Erfassungseinheit (14),
- Erfassen (42) einer aktuell an der Stationsbatterie (4) anliegenden Spannung mittels einer Erfassungseinheit (14),
- Erfassen (44) eines weiteren Parameters der Stationsbatterie (4) zur Erhöhung der Aussagekraft der zu bestimmenden aktuellen technischen Batterieparameter,
- Auswerten (52) der erfassten Parameter zur Bestimmung der aktuellen technischen Batterieparameter der Stationsbatterie (4) mittels einer Kontrolleinheit (12),
**dadurch gekennzeichnet,**
**dass** der weitere Parameter die mittels eines Sensors (8) messbare aktuelle Säuredichte der Stationsbatterie (4) ist.

2. Verfahren nach Anspruch 1,
**dadurch gekennzeichnet,**
**dass** zur Erhöhung der Aussagekraft der zu bestimmenden aktuellen technischen Batterieparameter zusätzlich ein Erfassen (46) der aktuellen Temperatur mittels eines Temperatursensors (10) vorgesehen ist.

3. Verfahren nach einem der vorangehenden Ansprüche,
**dadurch gekennzeichnet,**
**dass** das Erfassen (44, 46) der aktuellen Säuredichte und/oder der aktuellen Temperatur kontinuierlich und/oder zyklisch erfolgt.

4. Verfahren nach einem der vorangehenden Ansprüche,
**dadurch gekennzeichnet,**
**dass** die zu bestimmenden aktuellen technischen Batterieparameter die aktuell verfügbare Batteriekapazität (SOC) und/oder die aktuelle Leistungsfähigkeit (SOF) und/oder der aktuelle Alterungszustand (SOH) der Stationsbatterie (4) ist.

5. Verfahren nach einem der vorangehenden Ansprüche,
**dadurch gekennzeichnet,**
**dass** zusätzlich ein Ermitteln (48) von Randparametern vorgesehen ist.

6. Verfahren nach einem der vorangehenden Ansprüche,
**dadurch gekennzeichnet,**
**dass** die Randparameter durch den verwendeten Batterietyp vorgegeben sind, wobei die durch den verwendeten Batterietyp vorgegebenen Randparameter vorzugsweise die Ausgangssäuredichte und/oder das Elektrolytgewicht einer vollgeladenen Zelle und/oder das wirksame Elektrolytvolumen umfassen.

7. Verfahren nach einem der vorangehenden Ansprüche,
**dadurch gekennzeichnet,**
**dass** die Randparameter durch den Anlagenaufbau der Umspannanlage vorgegeben sind, wobei die durch den Anlagenaufbau der Umspannanlage vorgegebenen Randparameter vorzugsweise den Laststrom umfassen.

8. Verfahren nach einem der vorangehenden Ansprüche,
**dadurch gekennzeichnet,**
**dass** das Bestimmen der aktuellen technischen Batterieparameter der Stationsbatterie (4) zusätzlich unter einem Anpassen (50) an ein geeignetes Batteriemodell erfolgt.

9. Verfahren nach einem der vorangehenden Ansprüche,
**dadurch gekennzeichnet,**
**dass** das Bestimmen der aktuellen technischen Batterieparameter der Stationsbatterie (4) die Ermittlung des wirksamen Elektrolytvolumens Vw und die Ermittlung der entnommenen Strommenge Q_{E} umfasst, wobei zur Ermittlung der entnommenen Strommenge Q_{E} vorzugsweise die gemessene Säuredichte der Stationsbatterie (4) verwendet wird.

10. Verfahren nach einem der vorangehenden Ansprüche,
**dadurch gekennzeichnet,**
**dass** ein Übertragen (54) der erfassten aktuellen Säuredichte und/oder der aktuellen Temperatur und/oder der bestimmten technischen Batterieparameter der Stationsbatterie (4) mittels einer Kontrolleinheit (12) an eine Leitzentrale (16) vorgesehen ist, wobei die übertragenen Daten vorzugsweise vor einer Übertragung (54) parametrisiert werden.

11. Verfahren nach einem der vorangehenden Ansprüche,
**dadurch gekennzeichnet,**
**dass** auf Basis des erfassten aktuellen über die Stationsbatterie (4) übertragenen Stroms und/oder auf Basis der erfassten aktuell an der Stationsbatterie (4) anliegenden Spannung und/oder auf Basis der erfassten aktuellen Säuredichte der Stationsbatterie (4) und/oder auf Basis der erfassten aktuellen Temperatur, vorzugsweise auf Basis der bestimmten aktuellen technischen Batterieparameter der Stationsbatterie (4) ein Festlegen (56) eines Austauschtermins für den Austausch der Stationsbatterie (4) und/oder eines Wartungstermins für eine Wartung der Stationsbatterie (4) erfolgt.

12. Verfahren nach einem der vorangehenden Ansprüche,
**dadurch gekennzeichnet,**
**dass** auf Basis des erfassten aktuellen über die Stationsbatterie (4) übertragenen Stroms und/oder auf Basis der erfassten aktuell an der Stationsbatterie (4) anliegenden Spannung und/oder auf Basis der erfassten aktuellen Säuredichte der Stationsbatterie (4) und/oder auf Basis der erfassten aktuellen Temperatur, vorzugsweise auf Basis der bestimmten aktuellen technischen Batterieparameter der Stationsbatterie (4) ein Durchführen (58) eines Regenerationszyklus zur Regeneration der Stationsbatterie (4) erfolgt, wobei der Regenerationszyklus insbesondere die Einleitung gezielter Lade- und Entladevorgänge umfasst.

13. System (2) zur Bestimmung aktueller technischer Batterieparameter einer Stationsbatterie (4) einer Umspannanlage, insbesondere zur Ausführung eines Verfahrens nach einem der vorangehenden Ansprüche, umfassend
- eine Erfassungseinheit (14) zur Erfassung (40) eines aktuellen über die Stationsbatterie (4) übertragenen Stroms,
- eine Erfassungseinheit (14) zur Erfassung (42) einer aktuell an der Stationsbatterie (4) anliegenden Spannung,
- einen Sensor (8) zur Erfassung (44) einer aktuellen Säuredichte der Stationsbatterie (4),
- eine Kontrolleinheit (12) zur Auswertung der erfassten Parameter zur Bestimmung der aktuellen technischen Batterieparameter der Stationsbatterie (4).

14. System nach Anspruch 13,
**dadurch gekennzeichnet,**
**dass** ein Temperatursensor (10) zur Erfassung (46) der aktuellen Temperatur vorgesehen ist.

15. System nach Anspruch 13 oder 14,
**dadurch gekennzeichnet,**
**dass** die Erfassungseinheit (14) zur Erfassung eines aktuellen über die Stationsbatterie (4) übertragenen Stroms und/oder die Erfassungseinheit (14) zur Erfassung einer aktuell an der Stationsbatterie (4) anliegenden Spannung in einem Gleichrichter der Umspannanlage angeordnet ist.
